# FASCICULE DE BREVET EUROPEEN

(11) **EP 1 812 282 B1**
(45) Date de publication et mention de la délivrance du brevet: **30.07.2008**
(21) Numéro de dépôt: 05804951.1
(22) Date de dépôt: 15.11.2005
(51) Int. Cl.: B62M 3/08

(54) **PROCEDE ET DISPOSITIF POUR LA MESURE ET LE REGLAGE D'UN MOUVEMENT ANGULAIRE D'UNE CALE D'ACCROCHAGE SUR UNE PEDALE AUTOMATIQUE**
VERFAHREN UND VORRICHTUNG ZUM MESSEN UND EINSTELLEN DER WINKELBEWEGUNG EINER BEFESTIGUNGSSTOSSPLATTE AN EINEM PEDAL OHNE FUSSRASTE
METHOD AND DEVICE FOR MEASURING AND ADJUSTING THE ANGULAR MOVEMENT OF A FASTENING CLEAT ON A CLIPLESS PEDAL

(30) Priorité: 16.11.2004 CA 2485324
(43) Date de publication de la demande: 01.08.2007
(73) Titulaire: Look Cycle International, 58000 Nevers (FR)
(72) Inventeur: CHAMPOUX, Yvan, Rock Forest Quebec J1N 2K2 (CA); DROUET, Jean-Marc, Fleurimont Quebec J1G 4Z5 (CA); RICHARD, Simon, Sherbrooke Quebec J1R0R6 (CA)
(74) Mandataire: Loyer
(86) Numéro de dépôt international: PCT/FR2005/002831
(87) Numéro de publication internationale: WO 2006/053977

(56) Documents cités:
- EP-A- 0 393 585
- WO-A-02/20094
- DE-U1- 29 819 062
- US-A- 5 862 716
- PATENT ABSTRACTS OF JAPAN vol. 1999, no. 08, 30 juin 1999 (1999-06-30) & JP 11 059527 A (NIKKO:KK), 2 mars 1999 (1999-03-02)

## Description

La présente invention a trait aux pédales de vélo automatiques. Plus spécifiquement, la présente invention a trait à un dispositif qui permet la mesure du mouvement angulaire d'une cale d'accrochage d'une chaussure de cycliste par rapport à la pédale, et par conséquent le mouvement angulaire entre la chaussure et la pédale.

Depuis plus de cent ans, les vélos sont équipés de pédales fixées au bout de deux manivelles placées à 180 degrés l'une de l'autre de chaque coté d'un cadre ou d'une roue. Le cycliste transfert son énergie au vélo au moyen des pédales. De nombreuses formes de pédales ont été proposées au fil des années.

Au début du vingtième siècle et afin d'améliorer leur performance, les cyclistes, et surtout les cyclistes en compétition, ont trouvé utile de fixer la chaussure à la pédale au moyen de divers systèmes comme par exemple des cale-pieds équipés de sangles.

Au milieu des années 1980, la société LOOK a introduit une pédale révolutionnaire : la pédale automatique (en anglais clipless pedal).

La pédale automatique permet de fixer facilement la chaussure à la pédale par une simple pression sur la pédale. Pour se désengager (se déchausser), il suffit de pivoter et de forcer le talon vers l'extérieur. Les chaussures du cycliste n'étant plus attachées de façon permanente aux pédales, le pied peut se dégager par lui-même lors d'une chute, ce qui à l'époque était considéré comme le principal avantage de la pédale automatique. C'est la raison pour laquelle la pédale automatique s'appelle également pédale de sécurité.

Dès la sortie de la pédale LOOK, plusieurs fabricants ont emboîté le pas en proposant des variantes au niveau des mécanismes et des cales. Le principe de la pédale automatique est encore aujourd'hui le même. Toutes les pédales automatiques dans le commerce sont composées dé deux pièces principales :
- une plaque d'accrochage ou cale fixée solidement à la chaussure au moyen de vis;
- une pédale automatique sur laquelle vient se fixer la cale.

Les premières pédales automatiques reliaient solidement la chaussure à la pédale et aucun mouvement n'était permis entre ces deux pièces. Le pied et la pédale étaient donc solidaires et effectuaient une rotation uniquement autour de l'axe qui relie la pédale à la manivelle. Plus tard, on a estimé qu'un certain mouvement angulaire de la chaussure par rapport à la pédale devrait être permis afin d'éviter de trop grand stress aux membres inférieurs et notamment, aux genoux.

Une pédale automatique et une cale d'accrochage à jeu adapté ont ainsi été développées de manière à permettre un mouvement angulaire de la cale de quelques degrés lors du pédalage. Ce mouvement angulaire est aussi appelé liberté angulaire ou flottement angulaire. Les moyens permettant l'obtention de ce mouvement angulaire sont aujourd'hui bien connus et montrés dans, entre autres, le brevet européen EP 0 393 585 de la demanderesse. Ce brevet montre en outre une possibilité de régler la valeur de ce mouvement angulaire.

Plusieurs chercheurs se sont penchés sur le mouvement de pédalage d'un point de vue biomécanique. Un des objectifs des études vise à minimiser les risques de blessures par usure étant donné la nature très répétitive du geste. Par exemple, un cycliste moyen parcourt 5 000 km dans une année ; il donnera 1 million de coups de pédale. Les coureurs professionnels parcourent annuellement de 25 000 km à 40 000 km.

Plusieurs paramètres affectent le mouvement de pédalage: la hauteur de la selle, son recul, la morphologie propre du cycliste, la vitesse d'exécution, etc. On reconnaît toutefois que la position de la cale sur la chaussure est un paramètre clef.

Un dispositif permettant de mesurer le mouvement angulaire du cycliste pendant qu'il pédale constitue l'un des objets de l'innovation. Par cette mesure, on vise à aider à positionner la cale sur la chaussure afin que le cycliste puisse, entre autres, transmettre le maximum de puissance au vélo, utiliser de façon optimale la liberté angulaire offerte par les pédales, éviter les blessures et être confortable.

Étant donné que plusieurs paramètres associés au positionnement du cycliste sur le vélo affectent le pédalage, il est avantageux que le cycliste puisse utiliser ce dispositif sur son propre vélo. On fait donc référence ici à une mesure sur le terrain du fait que la mesure est effectuée sur le vélo du cycliste dans des conditions d'opérations qui ressemblent le plus possible à la réalité.

En outre, les marchands spécialisés en vélo ou les ajusteurs professionnels pour le vélo voudront disposer de cette technologie afin de régler la position des cales en faisant pédaler le cycliste sur un "home trainer" dans leur magasin.

En outre, le chercheur en biomécanique qui étudie le pédalage voudra également utiliser le dispositif sur la route pour obtenir un comportement lié aux différentes conditions d'entraînement.

Même si le document US5862716 décrit un dispositif qui permet une position angulaire libre d'une cale d'accrochage d'une chaussure de cycliste sur une pédale automatique, ce dispositif ne permet pas de détecter le mouvement angulaire de la cale et par conséquent, il permet encore moins de régler cette position angulaire.

Un but de l'invention est de proposer un procédé de mesure et de réglage de la position angulaire d'une cale d'accrochage d'une chaussure de cycliste sur une pédale automatique. Selon l'invention, le procédé est caractérisé par le fait qu'il comprend les phases suivantes consistant à :
a) fixer ladite cale d'accrochage dans une position angulaire approximative sous ladite chaussure de cycliste et l'accrocher sur ladite pédale automatique ;
b) prévoir un mouvement angulaire libre de ladite cale d'accrochage autour d'un axe de pivotement sensiblement vertical lors du pédalage ;
c) déterminer la plage dudit mouvement angulaire libre ;
d) mesurer les variations dans le temps de la valeur dudit mouvement angulaire libre lors du pédalage ;
e) calculer la moyenne des variations de la valeur dudit mouvement angulaire libre ;
f) régler ladite position angulaire de ladite cale d'accrochage de sorte que ladite moyenne des variations de la valeur dudit mouvement angulaire libre soit ramenée à la médiane de ladite plage dudit mouvement angulaire libre.

Selon d'autres caractéristiques de ce procédé :
- pour la mise en oeuvre de la phase f) une valeur de correction est obtenue en soustrayant ladite médiane de ladite moyenne des variations de la valeur dudit mouvement angulaire libre ;
- pour la mise en oeuvre de la phase f), un premier point de repère est placé sous la chaussure immédiatement derrière ladite cale et centré sur celle-ci, et un deuxième point de repère est placé centré sur le talon de la chaussure afin de permettre le réglage de ladite position angulaire de ladite cale d'accrochage à l'aide d'un moyen rapporteur adapté à ladite cale d'accrochage ;
- les variations dans le temps de la valeur dudit mouvement angulaire libre lors du pédalage sont enregistrées dans un moyen d'enregistrement embarqué ;
- les variations dans le temps de la valeur dudit mouvement angulaire libre lors du pédalage sont transmises sans fil à un dispositif de calcul.

Un autre but de la présente invention est de proposer un dispositif de mesure de la position angulaire d'une cale d'accrochage d'une chaussure de cycliste sur une pédale automatique. Selon l'invention, ce dispositif est caractérisé par le fait qu'il comporte un détecteur de mouvement fixé sur la pédale et apte à détecter en continu tout mouvement angulaire de ladite cale d'accrochage autour d'un axe de pivotement sur la pédale et à transmettre les données à un dispositif de traitement de données calculant les valeurs dudit mouvement angulaire en fonction du temps, ainsi que la moyenne des variations dudit mouvement angulaire dans le temps.

Selon d'autres caractéristiques de ce dispositif de mesure :
- ledit détecteur est un détecteur de mouvement sans contact ;
- ledit détecteur comprend un capteur magnétique fixé sur la pédale et disposé en regard d'au moins un aimant fixé sous ladite cale et apte à détecter toute variation de l'orientation du champ magnétique en fonction d'un mouvement angulaire de ladite cale ;
- plusieurs aimants sont positionnés de façon symétrique par rapport à l'axe de pivotement de la cale ;
- ledit dispositif de traitement comporte un module électronique embarqué apte à effectuer un traitement préliminaire des données de mesure, ledit module électronique étant alimenté par une source d'énergie embarquée ;
- ledit module électronique comporte une mémoire de stockage de données ;
- ledit module électronique est apte à transmettre sans fil les données traitées vers un dispositif de traitement et d'affichage des données de mesure ;
- ledit dispositif de mesure est associé à un dispositif de réglage pouvant être relié à la cale de manière à indiquer la position angulaire initiale de la cale fixée sous la chaussure et permettre une correction exacte de cette position ;
- ledit dispositif de réglage comporte un rapporteur dont le point d'intersection des lignes convergentes représentant les degrés correspond à l'axe de pivotement de la cale ;
- ledit rapporteur utilise un premier et un deuxième points de repère rapportés sous la chaussure permettant d'identifier la position angulaire initiale de la cale, le premier point de repère étant placé près de la cale, centré immédiatement derrière celle-ci, et le deuxième sur le talon de la chaussure et centré sur celui-ci ;
- ledit rapporteur comporte à son extrémité antérieure un évidement présentant une forme adaptée à la partie postérieure de la cale, et que ledit rapporteur est relié à la cale à l'aide d'une bande élastique qui dans sa partie médiane est reliée à un élément allongé rigide comportant une rainure constituant un logement pour l'extrémité antérieure de la cale.

D'autres buts, avantages et caractéristiques de la présente invention apparaîtront dans la description qui suit, relative à un mode de réalisation illustratif de l'invention montré dans les figures annexées dans lesquelles:
La figure 1 est une vue très schématique en élévation d'une chaussure installée sur une pédale automatique ;
La figure 2 est une vue très schématique de dessous illustrant le mouvement angulaire entre une chaussure de cycliste et une pédale mesuré par le dispositif faisant l'objet de la présente invention ;
La figure 3 représente très schématiquement dans une vue éclatée de côté les organes du dispositif et un concept d'acquisition de données selon un mode de réalisation de la présente invention ;
La figure 4 est une vue schématique de côté illustrant les organes du dispositif plus rapprochés les uns aux autres ;
La figure 5 est une vue de dessus d'une pédale automatique pourvue d'un capteur et d'un câble de liaison électrique ;
La figure 6 est une vue en perspective montrant une chaussure de cycliste pourvue d'une cale portant un aimant selon une mode de réalisation de l'invention ;
La figure 7 est un diagramme montrant des résultats de mesures des variations du mouvement angulaire de la cale, résultats obtenus à l'aide d'un dispositif conforme au mode de réalisation illustratif de l'invention ;
La figure 8 est un diagramme montrant des résultats de mesures permettant le calcul d'une moyenne des variations du mouvement angulaire de la cale, moyenne destinée au réglage de la position angulaire de la cale sous la chaussure de cycliste ;
La figure 9 montre un moyen rapporteur utilisé pour le réglage de la position angulaire de la cale sous la chaussure de cycliste ; et
La figure 10 montre le moyen rapporteur de la figure 9 appliqué sous la chaussure de cycliste et deux points de repère utilisés pour le réglage de la position angulaire de la cale.

Le mode de réalisation illustratif de la présente invention sera maintenant décrit à titre purement indicatif. Les organes analogues ou similaires dans les différentes figures porteront les mêmes numéros de référence.

Le mode de réalisation montré sur les figures illustre le procédé et le dispositif de mesure et de réglage selon l'invention utilisé pour le réglage de la position angulaire de la cale d'accrochage d'une chaussure de cycliste sur une pédale automatique.

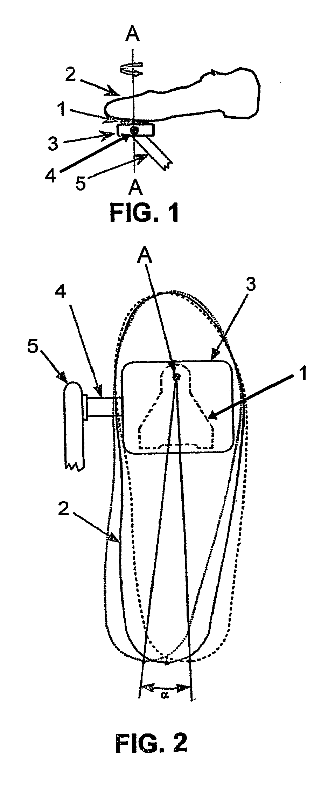

La figure 1 présente les organes principaux permettant de transmettre l'effort du cycliste à un vélo équipé d'une pédale automatique. Une cale d'accrochage 1 est fixée solidement sous une chaussure de cycliste 2 au moyen, par exemple, de vis; d'autres modes de fixation peuvent bien entendu être envisagés. Cette cale 1 assure le lien avec une pédale automatique 3 et se fixe à cette dernière au moyen d'un système mécanique simple souvent muni d'un ou de plusieurs ressorts.

Ce mécanisme permet d'attacher la cale 1 ou de la libérer (déchausser) à volonté. Il suffit pour le cycliste de forcer le talon vers l'extérieur avec une grande amplitude de pivotement pour déchausser. Ce mécanisme est bien connu dans ce domaine et ne sera pas décrit plus en détail puisqu'il ne se rapporte pas directement à l'invention.

La pédale automatique 3 est montée-rotative sur un axe de pédale 4 relié à une manivelle de pédalier 5.

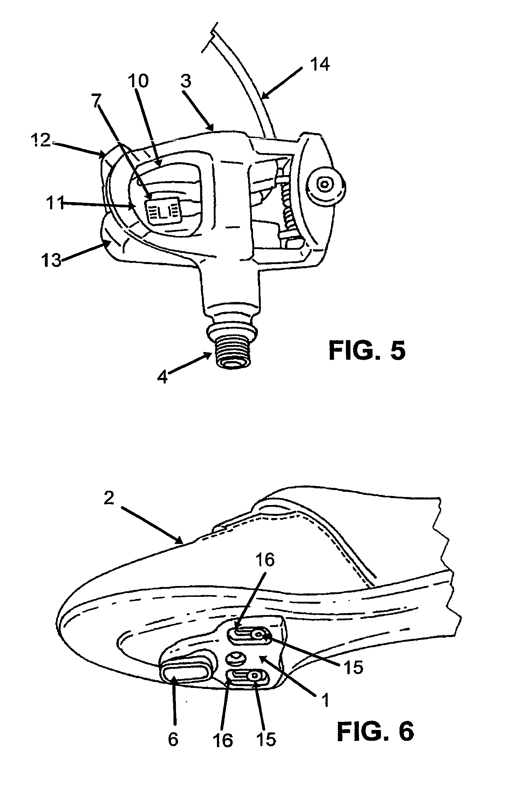

La figure 2 montre de façon schématique une vue du dessous de la pédale. On y voit en pointillé les positions extrêmes du mouvement angulaire de la chaussure de cycliste 2. Du fait que la chaussure 2 est solidaire de la cale 1, le mouvement angulaire est en effet intimement lié à un mouvement angulaire libre de la cale d'accrochage 1 autour d'un axe de pivotement A-A sensiblement perpendiculaire au plan de la pédale 3. Les positions extrêmes du mouvement angulaire de la chaussure de cycliste 2 correspondent en effet aux valeurs extrêmes de la plage du mouvement angulaire libre de la cale, c'est-à-dire les positions angulaires de la cale dans lesquelles elle commence à déclencher le déchaussage en repoussant de manière connue en soi un organe élastique d'accrochage à l'arrière de la pédale (représenté à la figure 5). Cette plage angulaire est indiquée par l'angle α dans la figure 2.

Ce mouvement angulaire libre ou débattement permet ainsi au pied du cycliste de pivoter autour de l'axe A-A qui est également sensiblement perpendiculaire à la surface d'appui de la pédale 3. L'arrière de la chaussure 2 peut ainsi se déplacer angulairement lors du pédalage de gauche à droite.

L'amplitude de ce mouvement angulaire est limitée par l'entrée de la cale en contact, à gauche respectivement à droite, avec des surfaces formant rampes sur l'organe élastique d'accrochage.

En outre, l'amplitude du mouvement angulaire libre offert par les pédales n'est pas toujours la même d'un modèle de pédale à l'autre et d'un fabricant à l'autre. Certaines pédales offrent typiquement un débattement maximal de 9° c'est-à-dire ±4.5° tandis que d'autres offrent un débattement de 15°. Certaines pédales sont munies d'un ajustement qui permet au cycliste de modifier l'amplitude maximale du mouvement angulaire permis par la pédale (voir par exemple le brevet EP 0 393 585 de la demanderesse).

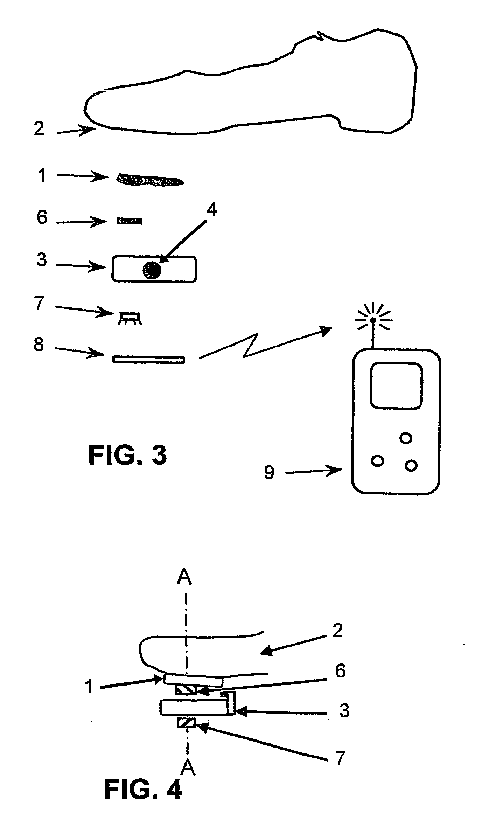

Les figures 3 et 4 illustrent un mode de réalisation d'un dispositif de mesure selon la présente invention. Un émetteur sous forme d'un aimant 6 est fixé à la cale 1 qui elle-même est fixée à la chaussure 2. Un ou éventuellement plusieurs aimants 6 peuvent ainsi être fixés sur la cale 1 ou même sur la chaussure 2.

L'aimant 6 produit un champ magnétique pouvant être capté par un détecteur de mouvement sans contact sous forme d'un capteur magnétique 7 qui est fixé sur la pédale 3. Le capteur 7 est fixé à la pédale 3 sur l'axe de pivotement A-A de la cale 1. La sensibilité du capteur 7 est non linéaire et elle est fonction du cosinus carré (cos² θ) de l'angle θ entre l'axe du champ magnétique et le capteur 7. Une orientation appropriée du capteur permet d'utiliser une portion suffisamment linéaire du capteur au passage à zéro.

Lorsque la cale 1 est engagée dans la pédale 3, l'aimant 6 se retrouve près du capteur magnétique 7 et crée ainsi un champ magnétique autour du capteur 7. Ce dernier est très sensible à toute variation de l'orientation du champ magnétique. L'aimant 6 crée ainsi un champ magnétique d'intensité suffisante au niveau du capteur 7 fixé sur la pédale 3. L'aimant doit être orienté de façon optimale par rapport à l'axe de sensibilité du capteur 7.

Dans le cas de plusieurs aimants 6, ils sont positionnés de façon symétrique par rapport à l'axe de pivotement de la cale 1. Un espace d'au moins 4 mm sépare la surface des aimants de la surface du capteur 7. Ceci permet le chaussage et déchaussage de la chaussure 2 tout en assurant un niveau de magnétisation suffisant.

Un mouvement angulaire du pied du cycliste provoque le pivotement de la chaussure 2, de la cale 1 et de l'aimant 6 par rapport au capteur magnétique 7 fixé sur la pédale 3. Le pivotement de l'aimant 6 provoque ainsi une variation de l'orientation du champ magnétique qui est mesuré par le capteur magnétique 7.

Cette variation de l'orientation du champ magnétique est captée par le capteur 7 est traité électroniquement par les composantes d'un module électronique 8 fixé sur la pédale 3. Ce traitement est un traitement préliminaire aboutissant à la génération d'un signal transmis par voie aérienne à un dispositif 9 de traitement et d'affichage des données. Par voie aérienne on entend tout moyen de transmission sans fil comme par exemple par voie hertzienne, par infrarouge etc.

Le module électronique 8 est alimenté par une pile (non représentée) embarquée sur le module. Ce dispositif est portatif et peut être transporté par le cycliste pour des mesures sur le terrain.

Le module électronique comporte avantageusement une mémoire de stockage de données qui le rend entièrement autonome.

La figure 5 montre que le capteur 7 est fixé dans un trou traversant 10 de la partie antérieure de la pédale 3 à l'aide d'un support 11 formé par une plaque pourvue de pattes d'encliquetage 12, 13 permettant de relier la plaque à la face inférieure de la pédale 3. Selon ce mode de réalisation, le capteur 7 est ainsi monté sur ce support amovible 11 qui est fixé temporairement à la pédale 3 du cycliste. Le cycliste utilise alors sa propre pédale 3 pour mesurer le mouvement angulaire libre de la cale 1.

Dans l'exemple illustré sur cette figure, le capteur 7 est relié à un dispositif (non représenté) de stockage et de traitement des données relatives aux mesures effectuées par un câble 14. Ce dernier peut être portatif et alimenté par des piles. Il peut également être alimenté par le réseau électrique.

La figure 6 montre une cale d'accrochage 1 fixée sous une chaussure de cycliste 2 à l'aide de deux vis de fixation 15 s'étendant à travers des trous oblongs traversants à la partie postérieure de la cale 1 permettant un certain réglage longitudinal de la celle-ci. Un aimant 6 est fixé dans un troisième trou de fixation sur la partie antérieure de la cale.

Les têtes des vis 15 reposent contre des entretoises oblongues 16 permettant un certain jeu transversal et de ce fait un léger pivotement de la cale 1. Cette possibilité de pivotement est indispensable pour le réglage ultérieur de la position angulaire de la cale.

Par ailleurs, le capteur 7 et le module électronique 8 peuvent faire partie intégrante d'une pédale qui est destinée à la mesure du mouvement angulaire libre de la cale 1. Cette pédale instrumentée est dans ce cas installée sur le vélo du cycliste pour effectuer les mesures.

Cette variante est particulièrement avantageuse pour déterminer la position angulaire optimale pour un cycliste qui par la suite utilisera une cale fixée dans une position angulaire sans mouvement angulaire libre, c'est-à-dire avec une plage de pivotement libre égale à zéro.

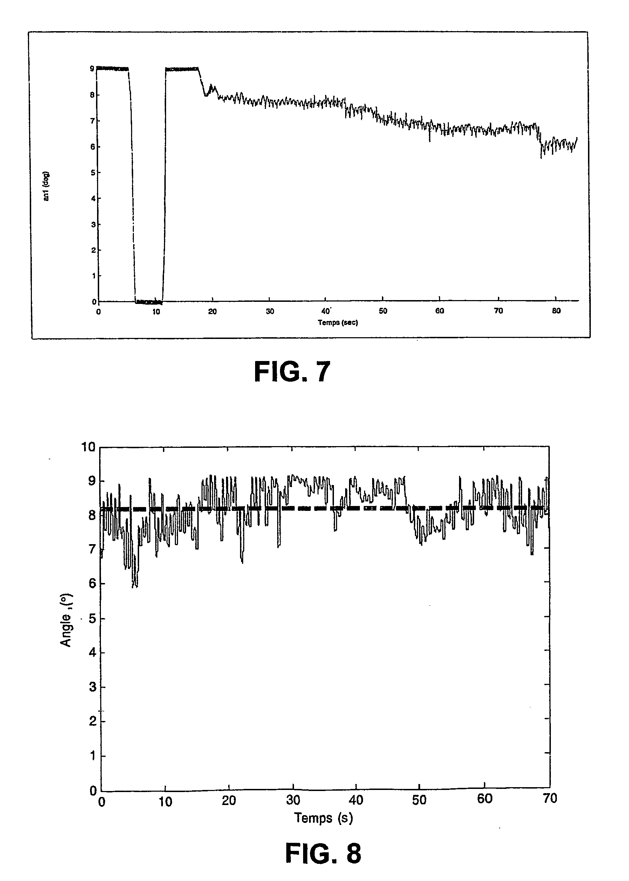

La figure 7 illustre le résultat de mesures effectuées avec un dispositif de mesure conforme au mode de réalisation illustratif de la présente invention. Ce graphique montre l'amplitude du mouvement angulaire en fonction du temps du pied gauche d'un cycliste.

Au début de la mesure, la chaussure 2 est déplacée à une extrémité du mouvement permis afin de fixer le zéro. Elle est ensuite déplacée à l'autre extrémité afin de vérifier la bonne marche du capteur 7. On peut remarquer sur le graphique les deux paliers au début de la mesure qui correspondent à la calibration.

L'amplitude maximale du mouvement angulaire est, dans cet exemple, de 9 degrés, ce qui correspond à l'amplitude du mouvement angulaire libre de la cale 1 offert par ce modèle de pédale. On constate lors du pédalage que le cycliste modifie initialement graduellement l'orientation de son pied par rapport à la pédale 3.

Le dispositif de mesure selon l'invention permet ainsi de mesurer en fonction du temps, le mouvement de pivotement angulaire libre de la cale 1 et, par conséquent, de la chaussure autour de l'axe de pivotement A-A.

Les données de la mesure sont enregistrées pendant que le cycliste pédale suivant un protocole spécifique. Le diagramme de la figure 8 représente un résultat typique. La valeur de l'angle égale à zéro degré correspond à la position de la chaussure gauche tournée vers l'extérieur (talon vers l'intérieur). La cale 1 est alors tout juste en contact avec une rampe de la pédale automatique 3. L'amplitude offerte de la pédale automatique utilisée pour cet exemple est de 9°. Pour une valeur d'angle inférieur à 0° ou supérieur à 9°, le cycliste amorce le processus de déchaussage.

La figure 8 montre la mesure du mouvement angulaire de la chaussure du cycliste par rapport à la pédale en fonction du temps sur une période de 70 secondes. Il ressort du diagramme que le cycliste déplace angulairement la chaussure avec la cale de manière à mener la cale en contact avec la rampe lors du pédalage, ce qui restreint sa liberté angulaire par la non utilisation de la partie opposée de la plage. La valeur moyenne mesurée est ici de 8.1 °, cette valeur étant indiqué par un trait horizontal en pointillé.

Il y a donc lieu de corriger cette situation. Le procédé de réglage vise à repositionner angulairement la cale 1 afin que le cycliste puisse utiliser toute la plage utile de la liberté angulaire offerte. Après réglage angulaire de la cale et fixation de celle-ci dans sa position corrigée, la valeur moyenne devrait donc se situer autour de 4.5°.

À partir d'une mesure suffisamment longue pour obtenir une moyenne statistiquement représentative, l'amplitude de la correction de la position de la cale à apporter se calcule en soustrayant 4.5° de la valeur moyenne mesurée. Une correction de 3.6° est nécessaire dans l'exemple montré.

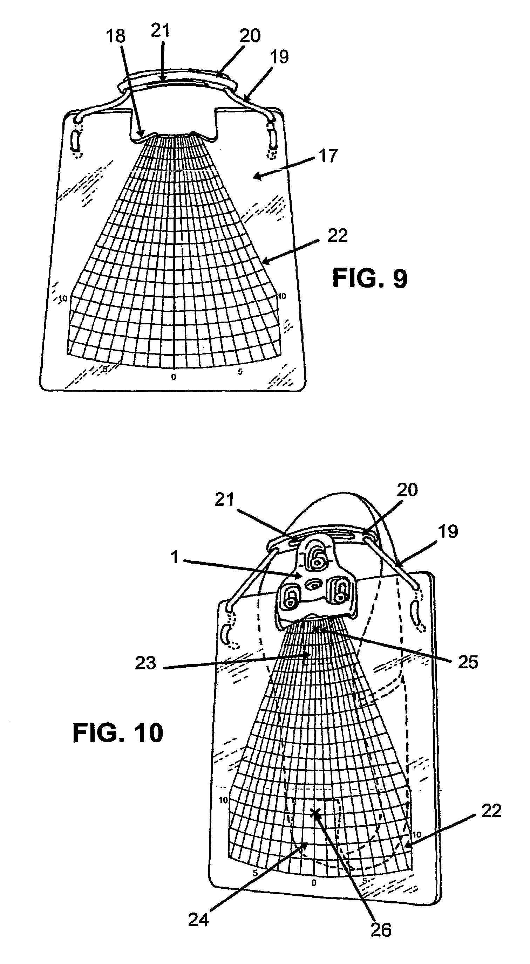

Les figures 9 et 10 montrent un mode de réalisation d'un dispositif d'aide au réglage utilisé pour la correction exacte ou le réglage de la position angulaire de la cale 1 sur la chaussure 2. Ce dispositif de réglage comprend un rapporteur 17 en matière transparente comportant à son extrémité antérieure un évidement 18 conformé pour recevoir la partie postérieure de la cale 1 qui alors est fixée sur la chaussure de cycliste 2.

Le rapporteur 17 comporte des moyens de liaison du rapporteur à la cale 1. Ces moyens de fixation comporte une bande élastique 19 dont les extrémités sont fixées à l'extrémité antérieure du rapporteur 17, de part et d'autre de l'évidement 18 de celui-ci. Cette bande élastique 19 est dans sa partie médiane reliée à un élément allongé rigide 20 comportant une rainure 21 constituant un logement pour l'extrémité antérieure de la cale 1.

Ces moyens de liaison permettent de solidariser le rapporteur 17 et la cale 1 lors du réglage de la position angulaire de cette dernière.

Un réseau 22 de lignes représentant des degrés est tracé sur le rapporteur 17 de manière à permettre les déplacements longitudinaux, latéraux et en rotation. Les prolongements des lignes convergent pour se croiser dans un point d'intersection correspondant à l'axe de pivotement de la cale 1.

Pour le réglage de la position angulaire de la cale 1, deux étiquettes 23, 24 sont temporairement placées sur la chaussure, l'une près de la cale 1, centrée immédiatement derrière celle-ci, et l'autre sur le talon de la chaussure 2 et centrée sur celui-ci. Une marque sous forme d'une croix sur chacune des étiquettes fait office de premier repère fixe 25 respectivement deuxième repère fixe 26 sur la chaussure 2 permettant d'identifier une position angulaire initiale de la cale 1 par une lecture sur le rapporteur 17.

Le rapporteur est ensuite glissé en place par l'arrière de la cale 1 et relié à celui-ci à l'aide des moyens de liaison 19, 20. On peut ensuite dévisser légèrement les vis de fixation 15 retenant la cale 1 à la chaussure 2 pour lui permettre de bouger librement. Étant donné que le rapporteur 17 est solidaire de la cale 1, il suit les mêmes mouvements. On peut ainsi en utilisant les deux points de repère sur les étiquettes 23, 24 déplacer de façon contrôlée la cale 1 par rapport à la chaussure 2 et apporter une correction précise de la position angulaire de la cale 1 grâce aux valeurs indiquées sur le rapporteur.

Plusieurs configurations alternatives au fonctionnement du dispositif de mesure du mouvement angulaire peuvent être envisagées.

Même si un seul mode de réalisation de l'invention a été décrit en détail, l'homme du métier peut, à partir de l'enseignement donné ci-dessus, concevoir d'autres variantes sans pour autant sortir du cadre de l'invention tel que défini dans les revendications.

## Revendications

1. Procédé pour la mesure et le réglage de la position angulaire d'une cale d'accrochage (1) d'une chaussure de cycliste (2) sur une pédale automatique (3), **caractérisé par le fait qu'**il comprend les phases suivantes consistant à :
a) fixer ladite cale d'accrochage (1) dans une position angulaire approximative sous ladite chaussure de cycliste (2) et l'accrocher sur ladite pédale automatique (3) ;
b) prévoir un mouvement angulaire libre de ladite cale d'accrochage (1) autour d'un axe de pivotement (A-A) sensiblement vertical lors du pédalage ;
c) déterminer la plage (α) dudit mouvement angulaire libre ;
d) mesurer les variations dans le temps de la valeur dudit mouvement angulaire libre lors du pédalage ;
e) calculer la moyenne des variations de la valeur dudit mouvement angulaire libre ;
f) régler ladite position angulaire de ladite cale d'accrochage (1) de sorte que ladite moyenne des variations de la valeur dudit mouvement angulaire libre soit ramenée à la médiane de ladite plage (α) dudit mouvement angulaire libre.

2. Procédé selon la revendication 1, **caractérisé par le fait que** pour la mise en oeuvre de la phase f) une valeur de correction est obtenue en soustrayant ladite médiane de ladite moyenne des variations de la valeur dudit mouvement angulaire libre.

3. Procédé selon la revendication 1 ou 2, **caractérisé par le fait que** pour la mise en oeuvre de la phase f), un premier point de repère (25) est placé sous la chaussure (2) immédiatement derrière ladite cale (1) et centré sur celle-ci, et un deuxième point de repère (26) est placé centré sur le talon de la chaussure afin de permettre le réglage de ladite position angulaire de ladite cale d'accrochage (1) à l'aide d'un rapporteur adapté à ladite cale d'accrochage.

4. Procédé selon l'une quelconque des revendications précédentes, **caractérisé par le fait que** les variations dans le temps de la valeur dudit mouvement angulaire libre lors du pédalage sont enregistrées dans un moyen d'enregistrement embarqué.

5. Procédé selon l'une quelconque des revendications 1 à 3, **caractérisé par le fait que** les variations dans le temps de la valeur dudit mouvement angulaire libre lors du pédalage sont transmis sans fil à un dispositif de traitement (9).

6. Dispositif de mesure de la position angulaire d'une cale d'accrochage d'une chaussure de cycliste (2) sur une pédale automatique (3), **caractérisé par le fait qu'**il comporte un détecteur de mouvement (7) fixé sur la pédale (3) et apte à détecter en continu tout mouvement angulaire de ladite cale d'accrochage (1) autour d'un axe de pivotement (A-A) sur la pédale et à transmettre les données à un dispositif de traitement de données (9) calculant les valeurs dudit mouvement angulaire en fonction du temps, ainsi que la moyenne des variations dudit mouvement angulaire dans le temps.

7. Dispositif de mesure selon la revendication 6, **caractérisé par le fait que** ledit détecteur (7) est un détecteur de mouvement sans contact.

8. Dispositif de mesure selon la revendication 7, **caractérisé par le fait que** ledit détecteur comprend un capteur magnétique (7) fixé sur la pédale (3) et disposé en regard d'au moins un aimant (6) fixé sous ladite cale (1) et apte à détecter toute variation de l'orientation du champ magnétique en fonction d'un mouvement angulaire de ladite cale (1).

9. Dispositif de mesure selon la revendication 8, **caractérisé par le fait que** plusieurs aimants (6) sont positionnés de façon symétrique par rapport à l'axe de pivotement (A-A) de la cale (1).

10. Dispositif de mesure selon l'une quelconque des revendications 6 à 9, **caractérisé par le fait que** ledit dispositif de traitement (9) comporte un module électronique embarqué (8) apte à effectuer un traitement préliminaire des données de mesure, ledit module électronique (8) étant alimenté par une source d'énergie embarquée.

11. Dispositif de mesure selon la revendication 10, **caractérisé par le fait que** ledit module électronique (8) comporte une mémoire de stockage de données.

12. Dispositif de mesure selon la revendication 10, **caractérisé par le fait que** ledit module électronique (8) est apte à transmettre sans fil les données traitées vers un dispositif de traitement et d'affichage (9) des données de mesure.

13. Dispositif de mesure selon l'une quelconque des revendications 6 à 12, **caractérisé par le fait que** ledit dispositif de mesure est associé à un dispositif de réglage (17) pouvant être relié à la cale (1) de manière à indiquer la position angulaire initiale de la cale fixée sous la chaussure (2) et permettre une correction exacte de cette position.

14. Dispositif de mesure selon la revendication 13, **caractérisé par le fait que** ledit dispositif de réglage comporte un rapporteur (17) dont le point d'intersection des lignes convergentes représentant les degrés correspond à l'axe de pivotement (A-A) de la cale (1).

15. Dispositif de mesure selon la revendication 14, **caractérisé par le fait que** ledit rapporteur (17) utilise un premier et un deuxième points de repère (25, 26) rapportés sous la chaussure (2) et permettant d'identifier la position angulaire initiale de la cale (1), le premier point de repère (25) étant placé près de la cale (1), centrée immédiatement derrière celle-ci, et le deuxième (26) sur le talon de la chaussure (2) et centrée sur celui-ci.

16. Dispositif de mesure selon la revendication 14 ou 15, **caractérisé par le fait que** ledit rapporteur (17) comporte à son extrémité antérieure un évidement (18) présentant une forme adaptée à la partie postérieure de la cale, et que ledit rapporteur (17) est relié à la cale (1) à l'aide d'une bande élastique qui dans sa partie médiane est reliée à un élément rigide (20) comportant une rainure (21) constituant un logement pour l'extrémité antérieure de la cale (1).

## Claims

1. Method for measuring and adjusting the angular position of a fastening cleat (1) of the shoe of a cyclist (2) on a clipless pedal (3), **characterized by** the fact that it comprises the following phases consisting of:
a) fixing said fastening cleat (1) in an approximate angular position under said shoe of the cyclist (2) and fastening it to said clipless pedal (3);
b) providing free angular movement of said fastening cleat (1) around an essentially vertical pivoting axis (A-A) during pedalling;
c) determining the range (a) of said free angular movement;
d) measuring variations of the value of said free angular movement over time during pedalling;
e) calculating the average of the variations of the value of said free angular movement;
f) adjusting said angular position of said fastening cleat (1) so that said average of the variations of the value of said free angular movement is brought to the median of said range (a) of said free angular movement.

2. Method according to claim 1, **characterised by** the fact that for the implementation of phase f) a correction value is obtained by subtracting said median from said average of the variations of the value of said free angular movement.

3. Method according to claim 1 or 2, **characterised by** the fact that for the implementation of phase f) a first reference point (25) is placed under the shoe (2) immediately behind said cleat (1) and centred on the latter, and a second reference point (26) is placed centred on the heel of the shoe so as to allow the adjustment of said angular position of said fastening cleat (1) by using a protractor adjusted to said fastening cleat.

4. Method according to any one of the preceding claims, **characterised by** the fact that variations in the value of said free angular movement over time during pedalling are recorded in an onboard recording means.

5. Method according to any one of claims 1 to 3, **characterised by** the fact that variations of the value of said free angular movement over time during pedalling are transmitted wirelessly to a processing device (9).

6. Device for measuring the angular position of a fastening cleat of the shoe of a cyclist (2) on a clipless pedal (3), **characterised by** the fact it comprises a motion detector (7) attached to the pedal (3) and designed to continuously detect any angular movement of said fastening cleat (1) around a pivoting axis (A-A) on the pedal and to transmit the data to a data processing device (9) which calculates the values of said angular movement as a function of time, as well as the average of the variations of said angular movement over time.

7. Measuring device according to claim 6, **characterised by** the fact that said detector (7) is a proximity motion detector.

8. Measuring device according to claim 7, **characterised by** the fact that said detector comprises a magnetic sensor (7) attached to the pedal (3) and arranged with respect to at least one magnet (6) fixed under said cleat (1) and able to detect any variation in the orientation of the magnetic field as a function of an angular movement of said cleat (1).

9. Measuring device according to claim 8, **characterised by** the fact that several magnets (6) are positioned symmetrically relative to the pivoting axis (A-A) of the cleat (1).

10. Measuring device according to any one of claims 6 to 9, **characterised by** the fact that said processing device (9) comprises an onboard electronic module (8) designed to carry out a preliminary processing of the measurement data, said electronic module (8) being powered by an onboard power source.

11. Measuring device according to claim 10, **characterised by** the fact that said electronic module (8) comprises a data storage memory.

12. Measuring device according to claim 10, **characterised by** the fact that said electronic module (8) can wirelessly transmit the processed data to a measurement data processing and display device (9).

13. Measuring device according to any one of claims 6 to 12, **characterised by** the fact that said measuring device is linked to an adjusting device (17) that can be connected to the cleat (1) so as to indicate the initial angular position of the cleat fixed under the shoe (2) and allow an exact correction of this position.

14. Measuring device according to claim 13, **characterised by** the fact that said adjusting device comprises a protractor (17) whose intersection point of the convergent lines representing the degrees corresponds to the pivoting axis (A-A) of the cleat (1).

15. Measuring device according to claim 14, **characterised by** the fact that said protractor (17) uses a first and a second reference point (25, 26) plotted under the shoe (2), allowing identification of the initial angular position of the cleat (1), the first reference point (25) being placed near the cleat (1), centred directly behind it, and the second (26) on the heel of the shoe (2) and centred on the latter.

16. Measuring device according to claim 14 or 15, **characterised by** the fact that said protractor (17) comprises on its front end a recess (18) with a shape adapted to the back part of the cleat, and that said protractor (17) is connected to the cleat (1) using an elastic band which in its median part is connected to a rigid element (20) comprising a groove (21) constituting a housing for the front end of the cleat (1).

## Patentansprüche

1. Verfahren zur Messung und Einstellung der Winkelstellung einer Einhakplatte (1) für einen Fahrradfahrer-Schuh (2) zum Einhaken an einem automatischen Pedal (3),
**dadurch gekennzeichnet,**
**dass** es die folgenden Phasen umfasst, die darin bestehen:
a. die genannte Einhakplatte (1) in einer ungefähren gewünschten Winkelstellung unter diesem Fahrradfahrer-Schuh (2) zu befestigen und sie an diesem automatischen Pedal (3) einzuhaken;
b. eine freie Winkelbewegung dieser Einhakplatte (1) um eine Schwenkachse (A-A), die beim Treten im Wesentlichen vertikal ist, vorzusehen;
c. den Winkelbereich (α) dieser freien Winkelbewegung zu bestimmen;
d. die Veränderungen in der Zeit des Werts dieser freien Winkelbewegung beim Treten zu berechnen;
e. den Mittelwert der Veränderungen des Werts dieser freien Winkelbewegung zu berechnen;
f. die genannte Winkelstellung der Einhakplatte (1) dergestalt einzustellen, dass dieser Mittelwert der Veränderungen des Werts dieser freien Winkelbewegung auf die Mittellinie des Winkelbereichs (α) dieser freien Winkelbewegung gebracht wird.

2. Verfahren nach Anspruch 1,
**dadurch gekennzeichnet,**
**dass** zur Bewerkstelligung der Phase f. ein Korrekturwert erzielt wird, indem die genannte Mittellinie von dem Mittelwert der Veränderungen des Werts dieser freien Winkelbewegung subtrahiert wird.

3. Verfahren nach Anspruch 1 oder 2,
**dadurch gekennzeichnet,**
**dass** zur Bewerkstelligung der Phase f. ein erster Markierungspunkt (25) unter dem Schuh (2) direkt hinter der Platte (1) angeordnet und auf diese zentriert ist, und ein zweiter Markierungspunkt (26) zentriert an der Schuhferse angeordnet ist, um die Einstellung der genannten Winkelstellung der Einhakplatte (1) mittels eines an diese Einhakplatte angepassten Winkelmessers zu ermöglichen.

4. Verfahren nach einem der vorherigen Ansprüche,
**dadurch gekennzeichnet,**
**dass** die Veränderungen in der Zeit des Werts dieser freien Winkelbewegung beim Treten in einem eingebauten Aufzeichnungsmittel aufgezeichnet werden.

5. Verfahren nach einem der Ansprüche 1 bis 3,
**dadurch gekennzeichnet,**
**dass** die Veränderungen in der Zeit des Werts dieser freien Winkelbewegung beim Treten drahtlos an eine Verarbeitungseinrichtung (9) übertragen werden.

6. Vorrichtung zur Messung der Winkelstellung einer Einhakplatte für einen Fahrradfahrer-Schuh (2) zum Einhaken an einem automatischen Pedal (3),
**dadurch gekennzeichnet,**
**dass** sie einen Bewegungsfühler (7) umfasst, der an dem Pedal (3) befestigt ist und geeignet ist, jede Winkelbewegung dieser Einhakplatte (1) um eine Schwenkachse (A-A) an dem Pedal kontinuierlich zu erkennen und die Daten an eine Datenverarbeitungseinrichtung (9) zu übertragen, welche die Werte dieser Winkelbewegung in Abhängigkeit von der Zeit sowie den Mittelwert der Veränderungen dieser Winkelbewegung in der Zeit berechnet.

7. Messvorrichtung nach Anspruch 6,
**dadurch gekennzeichnet,**
**dass** dieser Fühler (7) ein kontaktfreier Bewegungsfühler ist.

8. Messvorrichtung nach Anspruch 7,
**dadurch gekennzeichnet,**
**dass** dieser Fühler einen Magnetsensor (7) umfasst, der an dem Pedal (3) befestigt ist und gegenüber mindestens einem unter der Einhakplatte (1) befestigten Magneten (6) angeordnet ist und geeignet ist, jede Veränderung der Ausrichtung des Magnetfeldes in Abhängigkeit von einer Winkelbewegung dieser Einhakplatte (1) zu erkennen.

9. Messvorrichtung nach Anspruch 8,
**dadurch gekennzeichnet,**
**dass** mehrere Magneten (6) bezogen auf die Schwenkachse (A-A) der Einhakplatte (1) symmetrisch positioniert sind.

10. Messvorrichtung nach einem der Ansprüche 6 bis 9,
**dadurch gekennzeichnet,**
**dass** diese Verarbeitungseinrichtung (9) ein eingebautes elektronisches Modul (8) umfasst, das geeignet ist, eine vorbereitende Verarbeitung der Messdaten auszuführen, wobei dieses elektronische Modul (8) von einer eingebauten Energiequelle versorgt wird.

11. Messvorrichtung nach Anspruch 10,
**dadurch gekennzeichnet,**
**dass** dieses elektronische Modul (8) einen Datenspeicher enthält.

12. Messvorrichtung nach Anspruch 10,
**dadurch gekennzeichnet,**
**dass** dieses elektronische Modul (8) geeignet ist, die verarbeiteten Daten drahtlos an eine Verarbeitungs- und Anzeigeeinrichtung (9) für die Messdaten zu übertragen.

13. Messvorrichtung nach einem der Ansprüche 6 bis 12,
**dadurch gekennzeichnet,**
**dass** diese Messvorrichtung mit einer Einstellvorrichtung (17) verbunden ist, die dergestalt mit der Einhakplatte (1) verbunden werden kann, dass sie die Anfangs-Winkelstellung der unter dem Schuh (2) befestigten Einhakplatte anzeigt und eine genaue Korrektur dieser Stellung ermöglicht.

14. Messvorrichtung nach Anspruch 13,
**dadurch gekennzeichnet,**
**dass** diese Einstellvorrichtung einen Winkelmesser (17) beinhaltet, bei dem der Schnittpunkt der konvergierenden Linien, die die Winkelgrade darstellen, der Schwenkachse (A-A) der Einhakplatte (1) entspricht.

15. Messvorrichtung nach Anspruch 14,
**dadurch gekennzeichnet,**
**dass** dieser Winkelmesser (17) mit einem ersten und einem zweiten Markierungspunkt (25, 26) arbeitet, die unter dem Schuh (2) angebaut sind und es ermöglichen, die Anfangs-Winkelstellung der Einhakplatte (1) zu identifizieren, wobei der erste Markierungspunkt (25) nahe bei der Einhakplatte (1) angeordnet ist und unmittelbar hinter dieser zentriert ist, und der zweite Markierungspunkt (26) an der Schuhferse (2) und auf diese zentriert angeordnet ist.

16. Messvorrichtung nach Anspruch 14 oder 15,
**dadurch gekennzeichnet,**
**dass** der Winkelmesser (17) an seinem vorderen Ende eine Aussparung (18) enthält, deren Form an den hinteren Teil der Einhakplatte (1) angepasst ist, und dass dieser Winkelmesser (17) mit der Einhakplatte (1) mittels eines elastischen Bandes verbunden ist, das an seinem mittleren Teil mit einem starren Element (20) verbunden ist, welches eine Nut (21) aufweist, die eine Aufnahme für das vordere Ende der Einhakplatte (1) bildet.
